# EUROPEAN PATENT SPECIFICATION

(11) **EP 1 363 444 B1**
(45) Date of publication and mention of the grant of the patent: **17.10.2007**
(21) Application number: 03010947.4
(22) Date of filing: 16.05.2003
(51) Int. Cl.: H04M 3/42, H04M 7/00

(54) **Presence-aware private branch exchange (PBX)**
Anwesenheitsbewusste Nebenstellenanlage
Autocommutateur privé tenant compte de la présence

(30) Priority: 17.05.2002 US 381626 P
(43) Date of publication of application: 19.11.2003
(73) Proprietor: Alcatel Lucent, 75008 Paris (FR)
(72) Inventor: Wengrovitz, Michael, Concord, Massachusetts 01742 (US)

(56) References cited:
- EP-A- 1 179 941
- WO-A-00/59191
- WO-A-01/72055
- US-A- 6 052 461
- ROSENBERG J ET AL: "SIP For Presence" IEEE INTERNET DRAFT, 13 November 1998 (1998-11-13), XP002173451 Retrieved from the Internet: <URL:http://www.alternic.org/drafts/drafts -r-s/draft-rosenberg-sip-pip-00.txt> [retrieved on 2001-07-30]
- ROSENBERG ET AL: "SIP Extensions for Presence" IEEE INTERNET DRAFT, XX, XX, 2 March 2001 (2001-03-02), pages 1-39, XP002189885

## Description

### FIELD OF THE INVENTION

This invention relates generally to Internet telephony, and more particularly, to providing presence subscription, notification and management capabilities using a presence-aware Private Branch Exchange (PBX) system.

### BACKGROUND

Session Initiation Protocol (SIP) is an Internet Protocol (IP) for establishing, modifying, and terminating multimedia network communications sessions. Details about the SIP signaling protocol are set forth in Internet Engineering Task Force Request for Comment 2543 entitled "SIP: Session Initiation Protocol," March 1999 (hereinafter referred to as RFC 2543). SIP provides an alternative to Private Branch Exchange (PBX) and H.323 telephony signaling protocols. SIP provides an alternative to Private Branch Exchange (PBX) and H.323 telephony signaling protocols.

One of the most important application areas enabled by the SIP protocol relates to presence. By using standard SIP messages, a user agent client (UAC) can accept presence subscriptions from other UACs and subsequently provide presence notification to other UACs whenever its state changes. Presence also facilitates numerous next-generation applications such as polite-calling, call control based on user presence, ad-hoc conference setup based on participant availability and the like.

Details about presence are set forth in Internet Engineering Task Force Request for Comment 2778 and 2779, entitled "A Model for Presence and Instant Messaging," February 2000 (hereinafter referred to as RFC 2778) and "Instant Messaging/Presence Protocol Requirements," February 2000 (hereinafter referred to as RFC 2779), respectively.

In this context, subscribe refers to the process by which a first UAC requests permission to monitor a second UAC's presence state and the second UAC grants permission for the first UAC to monitor its presence state; notification refers to the process by which a first UAC sends its own presence state to other UACs by using, for example, a Session Description Protocol (SDP) body which contains the specific definition of presence states within an XML document; and management refers to the process of how a first UAC changes its own presence state (manually or automatically) and where the first UAC displays the presence state of other UACs.

One example of a SIP presence aware UAC is MICROSOFT^{®} RTC MESSENGER^{™}. With RTC MESSENGER^{™}, each PC-based UAC has the capability of subscribing or being subscribed to by other UACs, providing notification to or being notified by other UACs, displaying the presence state of itself and/or other UACs to which it has subscribed, and managing its own presence state by selecting "on the phone", "online", "busy", "away", "out to lunch", and/or the like, so that other subscribed UACs are correspondingly notified.

RTC MESSENGER^{™} is also an example of a symmetric presence agent. In general, a symmetric presence agent can subscribe to other UACs and can be subscribed to (i.e., grant subscriptions to) by other UACs, can send notifications to other UACs and can receive notifications from other UACs, and can change its own presence state and can display the presence states of other UACs.

Nevertheless, not all UACs are symmetric. For example, a non-symmetric UAC may be able to send notifications to other UACs but not able to receive notifications from other UACs, or it may be able to grant subscriptions to other UACs but not able to subscribe to other UACs.

RTC MESSENGER^{™} could also be used in a configuration with a presence aware SIP proxy and media server. In such a case, if a call was made by a first UAC to a second UAC and the second UAC was busy or otherwise unavailable, the first UAC would be directed to the media server, which plays music, advertisements, executes voice XML interactive voice response scripts and/or the like, so that when the second UAC becomes available, the SIP proxy server is notified so that it transfers the call to the second UAC or otherwise initiates a call to the first UAC to let it know the second UAC is available.

Unfortunately, there is no presence integration between a UAC, such as, RTC MESSENGER^{™}, and the PBX telephone. For example, RTC MESSENGER^{™} cannot subscribe to the presence state of a PBX telephone.

Also, SIP-aware PBXs exist that allow analog and digital PBX telephone sets to interface with both SIP and conventional PSTN networks. With such PBXs, analog and digital telephone sets can make and receive calls to and from SIP networks; unfortunately, SIP-aware PBXs do not currently provide presence capabilities. For example, a SIP UAC cannot subscribe to the presence state of a digital phone attached to the SIP-aware PBX.

EP 1 179 941 A2 discloses a switch emulation client in a data communication network adhering to a Session Initiation Protocol (SIP).

The document XP-002173451 discloses an extension to SIP for subscription, notification, fetching, and indications of presence events, wherein the extension comprises two new methods "SUBSCRIBE" and "NOTIFY".

Accordingly, there is a need for a presence aware Private Branch Exchange (PBX) and presence aware PBX system that has the capabilities of presence subscription, notification and management.

### SUMMARY OF THE INVENTION

The present invention provides for a presence aware communications system according to claim 1. Further embodiments provide for a presence aware Private Branch Exchange (PBX) and presence aware PBX system that has the capabilities of presence subscription, notification and management. The presence aware PBX and presence aware PBX system couple a conventional telephone set with a user agent client (UAC) and/or telephone. The presence capabilities can be achieved either through suitable modification of the PBX itself, in which case the modified PBX is referred to as a presence aware PBX, or through suitable coupling of the PBX to external system components which may include a subscription server or notification server, in which case the system is referred to as a presence aware PBX system, wherein the PBX is either a conventional PBX or a presence aware PBX.

In this context, subscribe or subscription refers to the process by which a first UAC user requests permission to monitor a second UAC or telephone user's presence state and the second UAC or telephone user grants permission for the first UAC user to monitor its presence state; notify or notification refers to the process by which a first UAC or telephone user sends its own presence state to another UAC user by using, for example, a Session Description Protocol (SDP) body which contains the specific definition of presence states within an XML document; and management refers to the process of how a first UAC or telephone changes its own presence state (manually by a user or automatically with the system) and where the first UAC displays the presence state of another UAC or telephone.

According to one embodiment of the invention, a non-symmetric presence aware PBX is coupled to an existing telephone set by a private network and a UAC by an IP network. The presence aware PBX and telephone set may be co-located and/or located a distance apart and/or coupled together by a wired or wireless link.

According to another embodiment, the invention is directed to a non-symmetric presence aware PBX system that includes a notification server that distributes a notification to a UAC.

According to another embodiment, the invention is directed to a non-symmetric presence aware PBX system that includes a subscription server that processes subscription requests. In such case, when the subscription server receives a subscription request, it will contact a user via a telephone to see if it is okay to grant the subscription. The subscription server preferably accepts a blanket request to grant all future re-subscriptions from the particular UAC and/or allows the user to cancel any subscription. In the latter case, the user may dial a number to interact with the subscription server using interactive voice response (IVR) means and/or the like, in order to cancel subscriptions to one or more prior subscribing UACs.

According to another embodiment, the invention is directed to a symmetric presence aware PBX system that includes a desktop comprised of a PBX telephone and associated UAC, wherein when the presence state changes on the telephone, the telephone signals a PBX of such change, the PBX notifies the associated UAC using an IP signaling means, such as, for example, CTI and/or the like, and the associated UAC subsequently notifies one or more remotely subscribed UACs of such change. In this embodiment, the associated UAC retains all of its existing symmetric capabilities relating to presence subscription, notification and management but is now further enhanced since the PBX telephone usage is now automatically conveyed to subscribers.

### BRIEF DESCRIPTION OF THE DRAWINGS

These and other features, aspects and advantages of the present invention will be more fully understood when considered with respect to the following detailed description, appended claims, and accompanying drawings where:
FIG. 1 is a system block diagram of an overall presence aware system, according to an exemplary embodiment of the invention;
FIG. 2 is a system functional block diagram that shows a non-symmetric presence aware PBX that allows a UAC to request and be granted a subscription to a telephone, and for the presence aware PBX to send notifications when the telephone changes its presence state, according to one embodiment of the invention;
FIG. 3 is a system functional block diagram that shows a non-symmetric presence aware PBX that allows a UAC to request and be denied a subscription to a telephone, according to one embodiment of the invention;
FIG. 4 is a functional block diagram of a non-symmetric presence aware PBX system that allows a telephone to notify a subscribed UAC of a presence change using a PBX and a notification server, according to one embodiment of the invention;
FIG. 5 is a functional block diagram of a non-symmetric presence aware PBX system that allows a UAC to request a subscription and re-subscription using a subscription server on behalf of a PBX, according to one embodiment of the invention; and
FIG. 6 is a functional block diagram of a symmetric presence aware PBX system where the UAC and telephone set are co-located, and wherein the UAC subscribes and grants subscriptions to a remote UAC, sends and receives notifications to and from a remote UAC, allows the user to manually manage his own presence state, displays the presence state of other UACs/users, and interworks with the PBX to automatically send notifications of the telephone presence state to one or more subscribed UACs, according to one embodiment of the invention.

### DETAILED DESCRIPTION OF THE SPECIFIC EMBODIMENTS

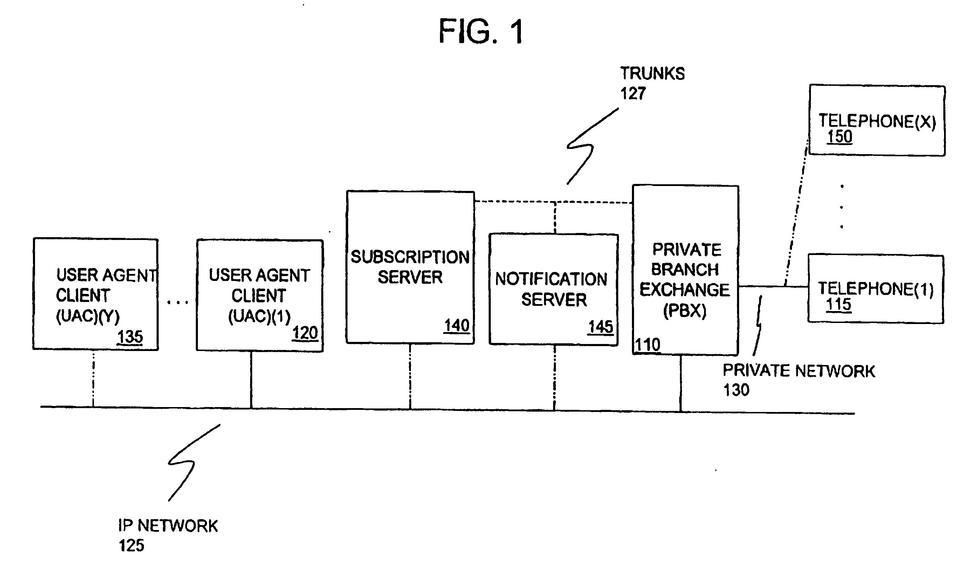

FIG. 1 is a system block diagram of an overall presence aware system, according to an exemplary embodiment of the invention. Telephones (1-X) 115-150 may be PBX legacy telephones using vendor-specific private digital and/or analog protocol. In this and other embodiments described herein, the description will be made primarily with reference to telephone (1) 115, with the understanding that the description applies equally as well to the other ones of the telephones (1-X) 115-150. In this and other embodiments described herein, the description will be made primarily with reference to UAC (1) 120, with the understanding that the description applies equally as well to the other ones of the UAC (1-Y) 120-135. The UACs(1-Y) 120-135 may be SIP-enabled personal computers, switches, routers, input/output cables, displays and/or the like for receiving and/or transmitting IP voice and/or data for allowing media communications. Telephones(1-X) 115-150 and UAC(1-Y) 120-135 in the exemplary embodiment reside in separate areas, coupled to each other over IP network 125 and private network 130; however, in another embodiment a telephone and a UAC may be co-located on a single desktop. PBX 110 is preferably a presence aware private switched PBX telephone system that is coupled to a public switching telephone network (PSTN). The presence capabilities can be achieved either through suitable modification of the PBX itself, in which case the modified PBX is referred to as a presence aware PBX, or through suitable coupling of the PBX to external system components which may include a subscription server or notification server, in which case the system is referred to as a presence aware PBX system, wherein the PBX is either a conventional PBX or a presence aware PBX.

Private network 130 and devices connected to it, such as, for example, PBX telephones(1-X) 115-150, may adhere to vendor specific private digital and/or analog protocols, IP network 125 and devices connected to it, such as, for example, UAC(1-Y) 120-135, subscription server 140, and notification sever 145, may adhere to IP protocols, and trunk 127 and devices connected to it, such as, for example, notification server 145 and subscription server 140, may adhere to telephony trunk protocols. Communication between telephones(1-X) 115-150 and presence aware PBX 110, may use, but are not limited to, private digital signaling and voice (PDSV) to exchange signaling, voice and dual tone multi-frequency (DTMF) digits. Communication between presence aware PBX 110 and IP network 125 and between IP network 125 and other devices connected to it, such as, for example, notification server 145, subscription server 140, UAC(1-Y) 120-135, may use, but are not limited to, SIP, real time transport protocol (RTP) for media exchange computer supported telephony application (CSTA), computer telephone integration (CTI) and/or the like. Communication between presence aware PBX 110, notification server 145 and subscription server 140 over trunk 127, may use, but are not limited to, telephony trunk signaling and voice to exchange signaling, voice and DTMF digits.

The system includes UAC(1) 120 initiating a subscription request to telephone(1) 115 over IP network 125, such as, for example, a wide area network and/or the like, translating through PBX 110, which is presence aware here, over private network 130, such as, for example, a local area network and/or the like, to telephone(1) 115. The system may also include a user of telephone(1) 115 granting the subscription request back over private network 130, translating through presence aware PBX 110, over IP network 125 to UAC(1) 120. The system also may include the user of telephone(1) 115 initiating a change of presence, wherein UAC(1) 120, which is subscribed to telephone(1) 115, is notified of the presence change over private network 130, translating through presence aware PBX 110 and over IP network 125.

Alternatively, the system may include the user of telephone(1) 115 rejecting the subscription request back over private network 130, translating through presence aware PBX 110, over IP network 125 to UAC(1) 120. Lastly, the system may include the user of telephone(1) 115 initiating a change of presence, wherein UAC(1) 120, which is not subscribed to telephone(1) 115, is not notified of the presence change.

The presence aware PBX 110 is programmed with software that enables it to translate, generate and route presence signals. Presence aware PBX 110 may route calls between telephones(1-X) 115-150 and telephones(1-X) 115-150 and, where PBX 110 is SIP enabled, translates and routes calls between telephones(1-X) 115-150 and UACs(1-Y) 120-135.

Conventional PBX software determines if telephone(1-X) 115-150 is off- or on-hook and the software uses this information, for example, to source or stop sourcing dial tone. A modification to this conventional software may be made that enables transmission of the telephone(1-X) 115-150 off-hook or on-hook information to a notification server 145. If conventional computer supported telephony application (CSTA) or computer telephone integration (CTI) software is already resident within presence aware PBX 110, this software may be modified to suitably translate, generate and route the telephone(1-X) 115-150 off- or on-hook information to notification server 145 via IP signaling which may consist of SIP notifications. Alternatively, the notification server 145 may directly receive the telephone(1-X) 115-150 off- or on-hook information via CTI or CSTA so that it performs the subsequent translation, generation and routing of presence signals to notify subscribers.

The notification server 145 may also include interactive voice response (IVR) software that allows determination of other forms of notification in addition to off-hook and on-hook. For example, the IVR software could allow for the user to push DTMF key1 to indicate do-not-disturb, push DTMF key2 to indicate out-of-the-office, push DTMF key3 to indicate out-to-lunch, and the like on telephone (1) 115. The notification server 145 software may then transmit presence information to subscribed UAC (1-Y) 120-135.

Consequently, the system may use notification server 145 within the presence aware PBX system to handle notifications rather than the PBX 110. In such case, when the presence state changes for telephone(1-X) 115-150, PBX 110 will only have to forward one or more first notifications to notification server 145 and notification server 145 will translate the one or more first notifications, and generate and route one or more second notifications to one or more subscribed UACs(1-Y) 120-135 over IP network 125.

The conventional PBX software may also be enhanced in additional ways to translate, generate and route presence information so that the notification server is not required. In this case, the presence aware PBX would directly send on-hook or off-hook information to subscribers. Also if a presence aware PBX 110 already has voicemail or interactive voice response (IVR) software installed which allows, for example, pushing DTMF key1 to hear voicemail, pushing DTMF key2 to record voicemail, pushing DTMF key3 to delete voicemail, and/or the like on telephone (1) 115, the conventional software may be enhanced to allow for pushing DTMF key4 to indicate do-not-disturb, pushing DTMF key5 to indicate out-of-the-office, pushing DTMF key6 to indicate out-to-lunch, and/or the like on telephone (1) 115. The enhanced software may then transmit presence information elsewhere - either directly to subscribed UAC (1-Y) 120-135 or indirectly to the subscribed UAC (1-Y) 120-135 over notification server 145 and IP network 125 via IP signaling.

Therefore, if notification server 145 is provided, UAC(1-Y) 120-135 may determine the presence state of telephone (1-X) 115-150 even if the presence aware PBX 110 does not have the capability of exchanging SIP signaling since existing computer telephone integration (CTI) can communicate the telephone (1-X) 115-150 state to the notification server 145 which thereby issues appropriate notifications. Alternatively, notification server 145 may work in conjunction with presence aware PBX 110 IVR or voicemail system so that when the user of telephone (1-X) 115-150 dials the IVR or voicemail and interacts with it to designate the user's presence state, the notification server 145 subsequently informs subscribers of the user's presence change.

In a configuration with one or more UACs(1-Y) 120-135, the system may also use a subscription server 140 to handle subscriptions and re-subscriptions on behalf of PBX 110. When one or more UACs(1-Y) 120-135 want to subscribe to telephone(1) 115, subscription server 140 will receive one or more first subscription requests and will translate the one or more first subscription requests, and generate and route one or more second subscription requests over trunk 127, through PBX 110 and over private network 130 to telephone (1) 115. For example, upon the reception of one or more subscription requests from UAC(1-Y) 120-135, subscription server 140 may issue a message in the form of a voice call to the PBX telephone set querying the telephone set user for accepting/rejecting this subscription. Additionally, subscription server 140 may log initial subscription grants and automatically grant later re-subscriptions so that when a UAC(1-Y) 120-135 renews its subscription, subscription server 140 will handle the authorization rather than PBX 110 to telephone (1-X) 115-150.

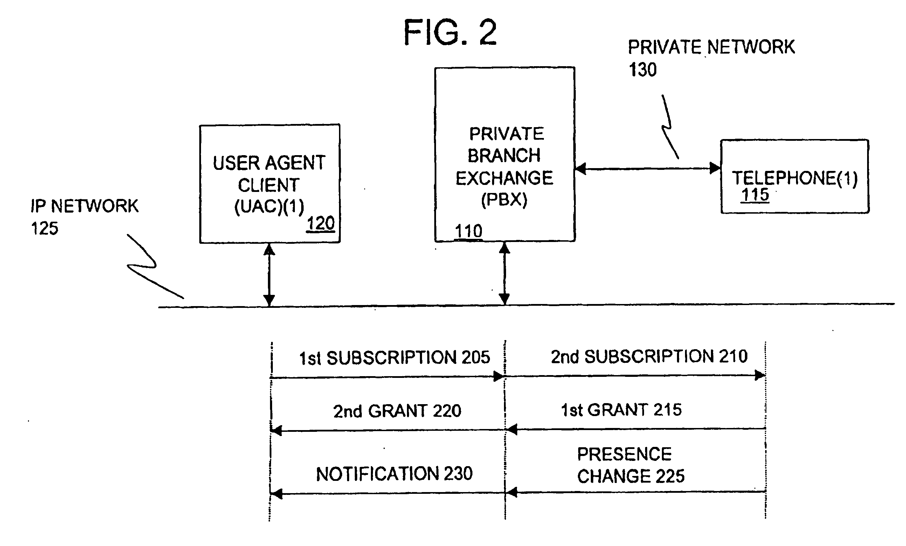

Following from FIG. 1, FIG. 2 is a system functional block diagram that shows a non-symmetric presence aware PBX that allows a UAC to request and be granted a subscription to a telephone, and for the presence aware PBX to send notifications when the telephone changes its presence state, according to one embodiment of the invention. In step 205 of the illustrated embodiment, presence aware PBX 110 receives a first subscription request from UAC(1) 120 over IP network 125, requesting permission to receive presence notification from telephone(1) 115. In step 210, presence aware PBX 110 translates the first subscription request, for example, a SIP subscribe, and generates a second subscription request, for example, a voice call, which is routed to telephone(1) 115 over private network 130. Presence aware PBX 110 then waits for a reply. The second subscription request, for example, rings telephone(1) 115 and verbally informs a user that UAC(1) 120 wishes to subscribe to his presence. In this case, in step 215, the user of telephone(1) 115 accepts the second subscription request and sends a first grant to presence aware PBX 110 over private network 130. The user of telephone(1) 115 may accept and generate the first grant in response to the second subscription request of step 210 through the use of dual tone multi-frequency (DTMF) dialing. In other embodiments, the user may also accept and generate the first grant in response to the second subscription request of step 210 through the use of preprogrammed soft-keys (for particular presence states) and/or speech recognition and/or the like. Thereafter, in step 220, presence aware PBX 110 translates the first grant, generates a second grant, such as, for example, a SIP OK, in response to the second subscription request, and then routes the second grant to UAC(1) 120.

If the user of telephone(1) 115 dials a particular extension to connect to an interactive voice response (IVR) and/or voice extensible markup language (VXML) server with which it interacts using DTMF (push number "1" to indicate "unavailable", number "2" to indicate "out of the office", and/or use the alphanumeric keypad to type the presence state and/or the like) and/or speech recognition/confirmation (say number "1" to indicate "unavailable", number "2" to indicate "out of the office", "yes or no" to confirm, cancel or reselect a selection and/or the like) his presence state changes. Consequently, in step 225, a presence change will be sent to presence aware PBX 110 for translation, generation and routing and, in step 230, a notification of such presence state change, for example, in the form of a SIP notify containing an SDP message body with XML fragment, will be sent to UAC(1) 120. If UAC(1) 120 periodically renews its subscription to telephone(1) 115 and the user of telephone(1) 115 has accepted an initial (second) request for subscription from UAC(1) 120, no later action need be taken at telephone (1) 115 since presence aware PBX 110 automatically translates, generates and routes subsequent grants.

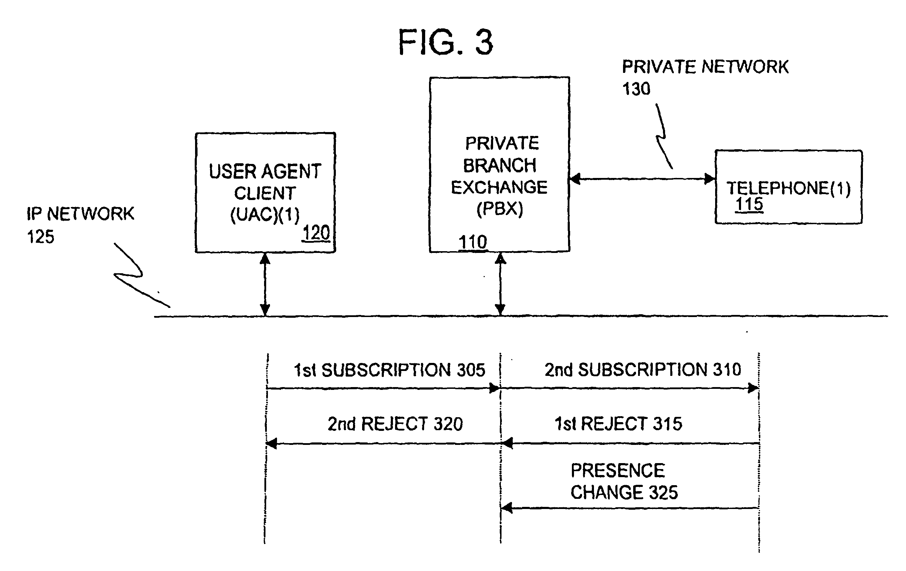

Following from the previous figures, FIG. 3 is a system functional block diagram that shows a non-symmetric presence aware PBX that allows a UAC to request and be denied a subscription to a telephone, according to one embodiment of the invention. In step 305 of the illustrated embodiment, presence aware PBX 110 receives a first subscription request from UAC(1) 120 over IP network 125, requesting permission to receive presence notification from telephone(1) 115. In step 310, presence aware PBX 110 translates the first subscription request for example, a SIP subscribe, and generates a second subscription request, for example, a voice call, which is routed to telephone(1) 115 over private network 130. Presence aware PBX 110 then waits for a reply. The second subscription request rings telephone(1) 115 and verbally informs a user that UAC(1) 120 wishes to subscribe to his presence. In this case, in step 315, the user of telephone(1) 115 denies the second subscription request and sends a first reject to presence aware PBX 110 over private network 130. The user of telephone(1) 115 denies and generates the first reject in response to the second subscription request of step 310 through the use of dual tone multi-frequency (DTMF) dialing. In other embodiments, the user may deny and generate the first reject in response to the second subscription request of step 310 through the use of preprogrammed soft-keys (for particular presence states) and/or speech recognition and/or the like. Thereafter, in step 320, presence aware PBX 110 translates the first reject, generates a second reject, such as, for example, a SIP message indicating rejected, in response to the second subscription request, and then routes the second reject to UAC(1) 120.

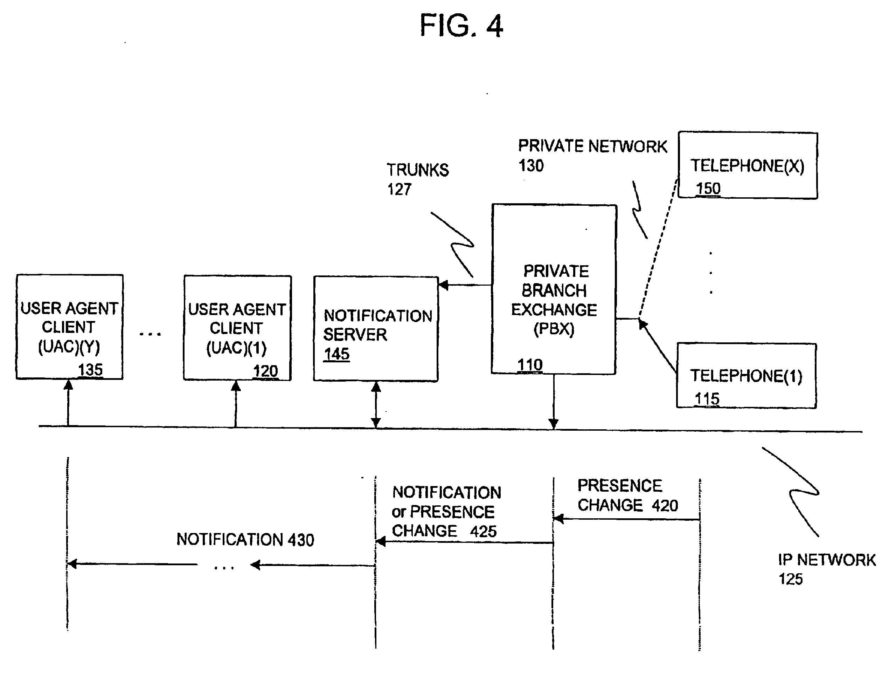

If the user of telephone(1) 115 dials a particular extension to connect to an interactive voice response (IVR) and/or voice extensible markup language (VXML) server with which it interacts using DTMF (push number "1" to indicate "unavailable", number "2" to indicate "out of the office", and/or use the alphanumeric keypad to type the presence state and/or the like) and/or speech recognition/confirmation (say number "1" to indicate "unavailable", number "2" to indicate "out of the office", "yes or no" to confirm, cancel or reselect a selection and/or the like) his presence state changes. Consequently, in step 325, a presence change will be sent to presence aware PBX 110 for translation, generation and routing; however, a notification of such presence state change will not be sent to UAC(1) 120 since this particular subscriber has not been authorized to monitor presence.
Following from the previous figures, FIG. 4 is a functional block diagram of a non-symmetric presence aware PBX system that allows a telephone to notify a subscribed UAC of a presence change using a PBX and a notification server, according to one embodiment of the invention. In step 420 of the illustrated embodiment, PBX 110 receives a presence change from telephone(1) 115 over private network 130 to indicate to its subscribed UAC (1-Y) 120-135 that its presence has changed. As a result, in step 425, PBX 110 either routes the presence change to notification server 145 so that notification server 145 can translate, generate and route a notification over IP network 125 to the subscribed UAC (1-Y) 120-135 in step 430, or translates, generates and routes a notification to notification server 145 and notification server 145 forwards the notification over IP network 125 to the subscribed UAC (1-Y) 120-135 in step 430. Additionally, telephone (1) 115 may specify its presence state to PBX 110, and PBX 110 may specify the presence state of telephone (1) 115 to notification server 145 via CTI so that subsequent notifications may be issued from notification server 145 to subscribed UAC (1-Y) 120-135, or, if the notification server 145 includes IVR, telephone (1) 115 can specify its presence state to the IVR so that subsequent notifications may be issued from notification server 145 to subscribed UAC (1-Y) 120-135. In this case, the notification server 145 may be a PC enabled with software, trunk interconnects and commercially available telephony boards.

As illustrated in FIG. 1, a modification to the conventional presence aware PBX 110 software may be made that enables transmission of the telephone(1) 115 presence information directly to notification server 145. If conventional computer supported telephony application (CSTA) or computer telephone integration (CTI) software is already resident within presence aware PBX 110, this software may be modified to suitably translate, generate and route the telephone(1) 115 presence information directly to notification server 145. Consequently, in step 420 of the illustrated embodiment, presence aware PBX 110 will receive a presence change from telephone(1) 115 over private network 130 to indicate to its subscribed UAC (1-Y) 120-135 that its presence has changed. As a result, in step 425, presence aware PBX 110 forwards the presence change of step 420 to notification server 145 so that notification server 145 can translate the presence change, and generate and route one or more second notifications to the subscribed UAC (1-Y) 120-135 over IP network 125 in step 430. Now, notification server 145 is performing the function that the presence aware PBX 110 may have performed by sending one or more of the second notifications to all the subscribed UAC (1-Y) 120-135 of telephone(1) 115.

Alternatively, the conventional PBX software may also be enhanced in additional ways to translate, generate and route presence information. For example, if presence aware PBX 110 already has voicemail or interactive voice response (IVR) software installed which allows, for example, pushing DTMF key1 to hear voicemail, pushing DTMF key2 to record voicemail, pushing DTMF key3 to delete voicemail, and/or the like, the conventional software may be enhanced to allow for pushing DTMF key4 to indicate do-not-disturb, pushing DTMF key5 to indicate out-of-the-office, pushing DTMF key6 to indicate out-to-lunch, and/or the like. The enhanced PBX voicemail or IVR software may then transmit presence information elsewhere - either directly to subscribed UAC (1-Y) 120-135 or indirectly to the subscribed UAC (1-Y) 120-135 via notification server 145. Therefore, if notification server 145 is provided, UAC(1-Y) 120-135 may determine the presence state of telephone (1-X) 115-150 even if the PBX 110 does not have the capability of exchanging SIP signaling since existing computer telephone integration (CTI) can communicate the telephone (1-X) 115-150 state to notification server 145 which thereby issues appropriate notifications. Alternatively, notification server 145 may work in conjunction with presence aware PBX 110 IVR or voicemail system so that when the user of telephone (1-X) 115-150 dials the IVR or voicemail and interacts with it to designate the user's presence state, the notification server 145 subsequently informs subscribers of the user's presence change.

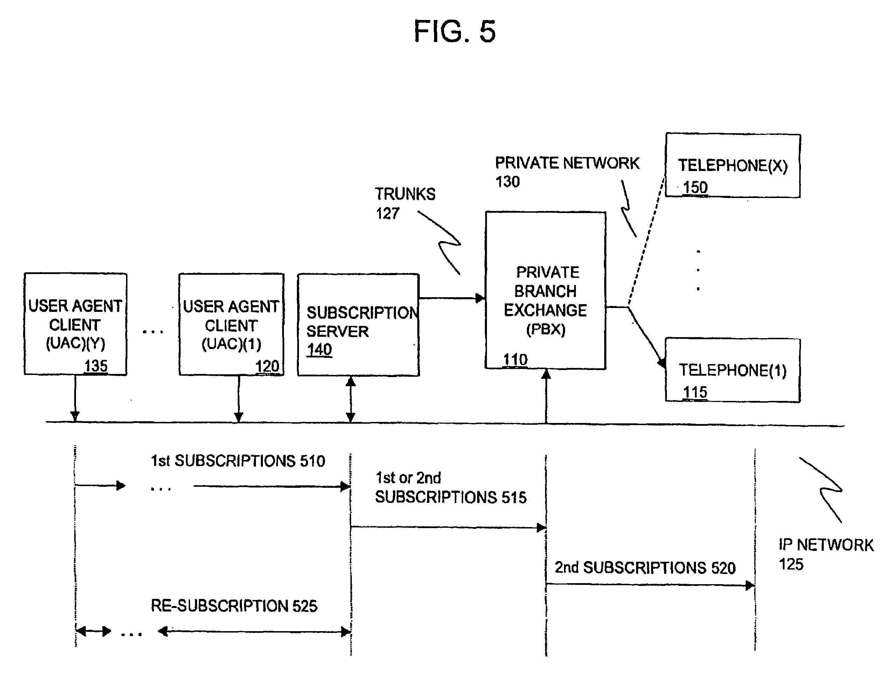

Following from the previous figures, FIG. 5 is a functional block diagram of a non-symmetric presence aware PBX system that allows a UAC to request a subscription and re-subscription using a subscription server on behalf of a PBX, according to one embodiment of the invention. When the one or more UACs(1-Y) 120-135 want to subscribe to telephone(1) 115, subscription server 140 will receive one or more first subscriptions from the one or more UACs(1-Y) 120-135 over IP network 125 in step 510, subscription server 140 will translate the one or more first subscriptions, and generate and route one or more second subscription requests over trunk 127 to PBX 110 in step 515 and PBX 110 will forward the one or more second subscription requests over private network 130 to telephone (1) 115 in step 520. In this case, the subscription server 140 may be a PC enabled with software, trunk interconnects and commercially available telephony boards. Therefore, upon the reception of one or more first subscription requests from UAC(1-Y) 120-135, subscription server 140 may issue a message in the form of a voice call directly to the telephone(1) 115 over trunk 127, through PBX 110 and over private network 130, querying the user of telephone (1) 115 to accept or reject the subscription. As a consequence, it is possible to offload some of the subscription tasks ordinarily performed by presence aware PBX 110 by using subscription server 140. Alternatively, subscription server 140 may receive one or more first subscriptions from the one or more UACs(1-Y) 120-135 in step 510, subscription server 140 may forward the one or more first subscription requests over IP network 125 to presence aware PBX 110 where presence aware PBX 110 translates the one or more first subscription requests, and generates and routes one or more second subscription requests over private network 130 to telephone (1) 115. In such case, PBX 110 may issue a message in the form of a voice call to the telephone(1) 115 querying the user to accept or reject the subscription. In either of the above cases, subscription server 140 may log initial subscription grants and automatically grant later re-subscriptions so that when a UAC(1-Y) 120-135 renews its subscription, subscription server 140 will handle the re-subscription 525 rather than PBX 110.

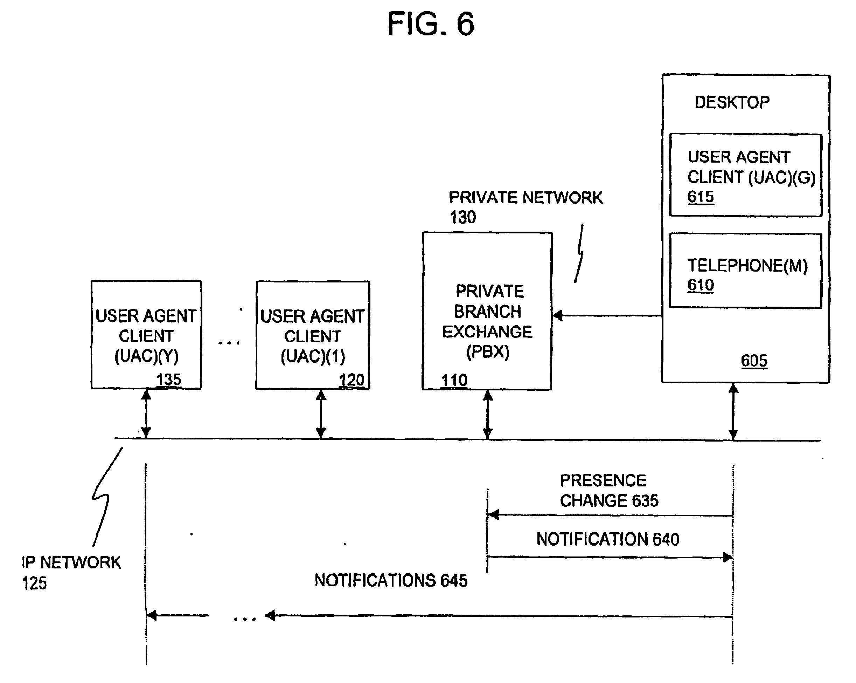

Following from the previous figures, FIG. 6 is a functional block diagram of a symmetric presence aware PBX system where the UAC and telephone set are co-located, and wherein the UAC subscribes and grants subscriptions to a remote UAC, sends and receives notifications to and from a remote UAC, allows the user to manually manage his own presence state, displays the presence state of other UACs/users, and interworks with the PBX to automatically send notifications of the telephone presence state to one or more subscribed UACs, according to one embodiment of the invention. UAC(G) 615 may be a software-modified version of a conventional UAC. The UAC (G) 615 software modification may include of adding the capability to receive CSTA and/or CTI and/or the like IP signaling information from PBX 110 over IP network 125 so that UAC (G) 615 can use this information to automatically adjust its presence state.

Although a conventional UAC typically requires a user to manually operate the graphical user interface (GUI) to designate the presence state, the UAC (G) 615 software modification within this embodiment, accomplished via algorithmic, table-lookup and/or other standard software means, also allows the presence state change to be made automatically, based upon receipt of information from PBX 110 via the IP signaling over IP network 125. Consequently, UAC(G) 615 has the additional functionality that enables its user to automatically adjust his presence state to on-the-phone or off-the-phone based upon the receipt of the IP signaling information from PBX 110 over IP network 125. In an exemplary embodiment, all other existing symmetric presence capabilities of UAC (G) 615 are retained. For example, UAC(G) 615 may retain all of its existing capabilities for displaying the presence state of other UACs, granting or denying subscriptions from other UACs and providing manual GUI-based control of its presence state and displaying the presence states of other UACs.

Consequently, in step 635, the presence change relating to off-hook or on-hook will be sent to PBX 110 and in step 640, a notification of such presence state change, which may be in the form of a CSTA or CTI message will be sent to UAC (G) 615 so that UAC (G) 615 can send one or more notifications to the subscribed UAC (1-Y) 120-135 in step 645.

Although this invention has been described in certain specific embodiments, those skilled in the art will have no difficulty devising variations which in no way depart from the scope and spirit of the present invention. It is therefore to be understood that this invention may be practiced otherwise than is specifically described. For example, although the above embodiments have been described with respect to the SIP protocol, a person skilled in the art should recognize that any other TCP/IP application layer (Layer 4) control protocol known in the art may be used instead of SIP, such as, for example, H.323, MGCP, or the like. The described embodiments are therefore not limited to the use of SIP messages. Thus, the present embodiments of the invention should be considered in all respects as illustrative and not restrictive, the scope of the invention to be indicated by the appended claims and their equivalents rather than the foregoing description.

## Claims

1. A communications system comprising: a first device (120), a second device (115), and a third device (110) operative between the first device (120) and the second device (115), wherein said first device(120) is configured to transmit to the third device (110) a first subscription request (205), wherein said third device (110) is configured to receive the first subscription request (205), and wherein said third device (110) is configured to translate said first subscription request (205) and to generate and to route a second subscription request (210) to the second device (115) based upon retrieved information in the first subscription request (205), **characterized in that** said first subscription request (205) is used for establishing presence, and **in that** a notification server (145) is provided which is coupled to said first device (120) and said third device (110), wherein said notification server (145) includes interactive voice response, IVR, software that allows determination of other forms of notification in addition to off-hook and on-hook.

2. The system of claim 1, wherein the second subscription request (210) comprises a vendor specific private protocol subscription request, a private digital signaling and voice (PDSV) to exchange signaling protocol subscription request, an analog signal subscription request or a voice call.

3. The system of claim 1, wherein the first device (120) comprises a user agent client (UAC), the second device (115) comprises a private branch exchange (PBX) telephone and the third device (110) comprises a presence aware private branch exchange (PBX).

4. The system of claim 1, wherein the first subscription request (205) comprises an IP protocol subscription request or a session initiation protocol (SIP) subscription request.

5. The system of claim 1, wherein the translation is from IP to vendor specific private protocol.

6. The system of claim 1, wherein the second device (115) is configured to transmit to the third device (110) a first grant (215) for establishing presence, the third device (110) is configured to receive the first grant (215) and, in response, to log and to translate the first grant (215), and to generate and route a second grant (220) to the first device (120).

7. The system of claim 1, wherein the second device (115) is configured to transmit to the third device (110) a first reject for establishing presence, the third device (110) is configured to receive the first reject and, in response, to log and translate the first reject, and to generate and route a second reject to the first device (120).

8. The system of claim 1, wherein the second device (115) is configured to transmit to the third device (110) a presence change, the third device (110) is configured to receive the presence change and, in response, to translate the presence change, and to generate and route a notification (230) to the first device (120).

9. The system of claim 8, wherein the first device (120) is configured to transmit to the third device (110) a presence re-subscription request for confirming presence, the third device (110) is configured to receive the presence re-subscription request and, upon verifying the prior first grant (215) in its log, to re-transmit the second grant (220) to the first device (120) to confirm presence.

10. The system of claim 1 further comprising a notification server (145) coupled to the first device (120) and third device (110), wherein the second device (115) is configured to transmit a presence change (420) to the third device (110), the third device (110) is configured to receive the presence change (420) and, in response, to translate the presence change (420), and to generate and route a notification (425) to the notification server (145), and wherein the notification server (145) is configured to route the notification (430) to the first device (120).

11. The system of claim 1 further comprising a notification server (145) coupled to the first device (120) and third device (110), wherein the second device (115) is configured to transmit a presence change (420) to the third device (110), the third device (110) is configured to receive the presence change (420) and, in response, to route the presence change (420) to the notification server (145), and wherein the notification server (145) is configured to translate the presence change (420), and to generate and route a notification (430) to the first device (120).

12. The system of claim 1 further comprising a subscription server (140) coupled to the first device (120) and third device (110), wherein the first device (120) is configured to transmit a first subscription (510) to the subscription server (140), the subscription server (140) is configured to receive the first subscription (510) and, in response, to translate the first subscription (510), and to generate and route a second subscription (515) to the third device (110), and wherein the third device (110) is configured to route the second subscription (515) to the second device (115).

13. The system of claim 12, wherein the first device (120) is configured to transmit to the subscription server (140) a presence re-subscription request (525) for confirming presence, the subscription server (140) is configured to receive the presence re-subscription request and, upon verifying the first grant (215) in its log, to re-transmit a second grant (220) to the first device (120) to confirm presence.

14. The system of claim 1 further comprising a subscription server (140) coupled to the first device (120) and third device (110), wherein the first device (120) is configured to transmit a first subscription (510) to the subscription server (140), the subscription server (140) is configured to receive the first subscription (510) and, in response, to route the first subscription (510) to the third device (110) and the third device (110) is configured to translate the first subscription (510), and to generate and route a second subscription (515) to the second device (115).

15. The system of claim 14, wherein the first device (120) is configured to transmit to the subscription server (140) a presence re-subscription request (525) for confirming presence, the subscription server (140) is configured to receive the presence re-subscription request (525) and, upon verifying the first grant (215) in its log, to re-transmit a second grant (220) to the first device (120) to confirm presence.

16. A method for establishing a communications system between a first, second and third device (120, 115, 110), the method comprising: receiving a first subscription request (205) from the first device (120); operating on the first subscription request (205) to result in a second subscription request (210); and transmitting the second subscription request (210) to the second device (115) based upon retrieved information in the first subscription request (205), **characterized in that** said first subscription request (205) is used for establishing presence, and **in that** a notification server (145) is used which is coupled to said first device (120) and said third device (110), wherein said notification server (145) includes interactive voice response, IVR, software which determines other forms of notification in addition to off-hook and on-hook.

17. The method of claim 16, wherein said step of operating on said first subscription request (205) comprises translating said first subscription request (205) to a vendor specific private protocol subscription request, a private digital signaling and voice (PDSV) to exchange signaling protocol subscription request, an analog signal subscription request or a voice call.

18. The method of claim 16, wherein operating on the first subscription request (205) comprises translating the first subscription request (205), and generating and routing the second subscription request (210) by the third device (110).

19. The method of claim 16, further comprising transmitting a first grant (215) by the second device (115) for establishing presence, receiving the first grant (215) by the third device (110), operating on the first grant (215) by the third device (110) to result in a second grant (220), and transmitting the second grant (220) to the first device (120).

20. The method of claim 19, further comprising transmitting a presence re-subscription request (525) by the first device (120) for confirming presence, receiving the presence re-subscription request (525) by the third device (110), verifying the prior first grant (215) by the third device (110), and re-transmitting the second grant (220) to the first device (120) to confirm presence.

21. The method of claim 16, further comprising transmitting a first reject (315) by the second device (115) for establishing presence, receiving the first reject (315) by the third device (110), operating on the first reject (315) by the third device (110) to result in a second reject (320), and transmitting the second reject (320) to the first device (120).

22. The method of claim 19, further comprising transmitting a presence change (420) by the second device (115), receiving the presence change (420) by the third device (110), operating on the presence change (420) by the third device (110) to result in a notification (425), and transmitting the notification (430) to the first device (120) .

23. The method of claim 19 further comprising transmitting a presence change (420) by the second device (115), receiving the presence change (420) by the third device (110), operating on the presence change (420) by the third device (110) to result in a notification (425), transmitting the notification (425) by the third device (110), receiving the notification (425) by a notification server (145), and transmitting the notification (430) to the first device (120).

24. The method of claim 19 further comprising transmitting a presence change (420) by the second device (115), receiving the presence change (420) by the third device (110), transmitting the presence change (425) by the third device (110), receiving the presence change (425) by a notification server (145), operating on the presence change (425) by the notification server (145) to result in a notification (430), transmitting the notification (430) by the notification server (145) to the first device (120).

25. The method of claim 16, wherein receiving comprises receiving the first subscription request (205) at a subscription server (140) and operating comprises operating on the first subscription request (205) by the subscription server (140).

26. The method of claim 25, further comprising transmitting a first grant (215) by the second device (115) for establishing presence, receiving the first grant (215) by the third device (110), operating on the first grant (215) by the third device (110) to result in a second grant (220), and transmitting the second grant (220) to the subscription server (140) and the first device (120).

27. The method of claim 26, further comprising receiving a presence re-subscription request (525) for confirming presence by the subscription server (140), verifying the second grant (220) by the subscription server (140) in its memory, and re-transmitting the second grant (220) to the first device (120) to confirm presence.

28. The method of claim 25, further comprising transmitting a first grant (215) by the second device (115) for establishing presence, receiving the first grant (215) by the third device (110), operating on the first grant (215) by the third device (110) to result in a second grant (220), and transmitting the second grant (220) to the subscription server (140) and the first device (120), wherein operating comprises operating on the first subscription request (205) by the third device (110).

29. The method of claim 28, further comprising receiving a presence re-subscription request for confirming presence by the subscription server (140), verifying the second grant (220) by the subscription server (140) in its memory, and re-transmitting the second grant (220) to the first device (120) to confirm presence.

## Patentansprüche

1. Ein Kommunikationssystem, das folgendes umfasst: Eine erste Einrichtung (120), eine zweite Einrichtung (115) und eine dritte Einrichtung (110), die zwischen der ersten Einrichtung (120) und der zweiten Einrichtung (115) arbeitet, wobei die erste Einrichtung (120) konfiguriert ist, eine erste Anmeldungs-Anforderung (205) zur dritten Einrichtung (110) zu senden, wobei die dritte Einrichtung (110) konfiguriert ist, die erste Anmeldungs-Anforderung (205) zu empfangen und worin die dritte Einrichtung (110) konfiguriert ist, die erste Anmeldungs-Anforderung (205) umzuformen und eine zweite Anmeldungs-Anforderung (210) zu erzeugen und sie zur zweiten Einrichtung (115) zu leiten, was auf der abgerufenen Information in der ersten Anmeldungs-Anforderung (205) basiert, **dadurch gekennzeichnet, dass** die erste Anmeldungs-Anforderung (205) dazu benutzt wird, die Anwesenheit einzurichten, und **dadurch**, dass ein Benachrichtigungs-Server (145) bereitgestellt wird, der mit der ersten Einrichtung (120) und der dritten Einrichtung (110) gekoppelt ist, wobei der Benachrichtigungs-Server (145) interaktive Sprach-Antwort-Software (IVR) enthält, die die Bestimmung anderer Formen der Benachrichtigung, zusätzlich zum Abheben und Auflegen des Hörers, erlaubt.

2. Das System aus Anspruch 1, wobei die zweite Anmeldungs-Anforderung (210) eine Anmeldungs-Anforderung eines herstellerspezifischen privaten Protokolls, eine private digitale Signalisierung und Sprache (PDSV) zum Austausch von Signalisierungs-Protokoll-Anmeldungs-Anforderungen, eine Azaalogsignal-Anmeldungs-Anforderung oder ein Sprach-Anruf ist.

3. Das System aus Anspruch 1, wobei die erste Einrichtung (120) ein Benutzer-Agent-Client (UAC), die zweite Einrichtung (115) ein Telefon einer Nebenstellenanlage (PBX) ist und die dritte Einrichtung (110) eine anwesenheitsbewusste Nebenstellenanlage (PBX) ist.

4. Das System aus Anspruch 1 wobei die erste Anmeldungs-Anforderung (205) eine IP-Protokoll-Anmeldungs-Anforderung oder eine Session Initiation Protocol (SIP) Anmeldungs-Anforderung ist.

5. Das System aus Anspruch 1, wobei die Umformung von IP zu dem herstellerspezifischen privaten Protokoll erfolgt.

6. Das System aus Anspruch 1, wobei die zweite Einrichtung (115) konfiguriert ist, eine erste Genehmigung (215) zum Aufbau der Anwesenheit zur dritten Einrichtung (110) zu senden, die dritte Einrichtung (110) konfiguriert ist, die erste Genehmigung (215) zu empfangen, und als Reaktion darauf die erste Genehmigung (215) zu protokollieren und umzusetzen und eine zweite Genehmigung (220) zu erzeugen und zur ersten Einrichtung (120) zu senden.

7. Das System aus Anspruch 1, wobei die zweite Einrichtung (115) konfiguriert ist, eine erste Ablehnung des Aufbaus der Anwesenheit zur dritten Einrichtung (110) zu senden, die dritte Einrichtung (110) konfiguriert ist, die erste Ablehnung zu empfangen, und als Reaktion darauf die erste Ablehnung zu protokollieren und umzusetzen und eine zweite Ablehnung zu erzeugen und zur ersten Einrichtung (120) zu senden.

8. Das System aus Anspruch 1, wobei die zweite Einrichtung (115) konfiguriert ist, eine Anwesenheits-Änderung zur dritten Einrichtung (110) zu senden, die dritte Einrichtung (110) konfiguriert ist, die Anwesenheits-Änderung zu empfangen, und als Reaktion darauf die Anwesenheits-Änderung umzusetzen und eine Benachrichtigung (230) zu erzeugen und zur ersten Einrichtung (120) zu senden.

9. Das System aus Anspruch 8, wobei die erste Einrichtung (120) konfiguriert ist, eine erste Anwesenheits-Neuanmeldungs-Anforderung zur Bestätigung der Anwesenheit zur dritten Einrichtung (110) zu senden, die dritte Einrichtung (110) konfiguriert ist, die Anwesenheits-Neuanmeldungs-Anforderung zu empfangen, und nach Überprüfung der vorherigen ersten Genehmigung (215) in ihrem Protokoll, die zweite Genehmigung (220) erneut zur ersten Einrichtung (120) zu senden, um die Anwesenheit zu bestätigen.

10. Das System aus Anspruch 1, das weiterhin einen Benachrichtigungs-Server (145) umfasst, der mit der ersten Einrichtung (120) und der dritten Einrichtung (110) gekoppelt ist, wobei die zweite Einrichtung (115) konfiguriert ist, eine Anwesenheits-Änderung (420) zur dritten Einrichtung (110) zu senden, wobei die dritte Einrichtung (110) konfiguriert ist, die Anwesenheits-Änderung (420) zu empfangen und als Reaktion darauf die Anwesenheits-Änderung (420) umzusetzen und eine Benachrichtigung (425) zu erzeugen und zum Benachrichtigungs-Server (145) zu senden, und worin der Benachrichtigungs-Server (145) konfiguriert ist, die Benachrichtigung (430) zur ersten Einrichtung (120) zu senden.

11. Das System aus Anspruch 1, das weiterhin einen Benachrichtigungs-Server (145) umfasst, der mit der ersten Einrichtung (120) und der dritten Einrichtung (110) gekoppelt ist, wobei die zweite Einrichtung (115) konfiguriert ist, eine Anwesenheits-Änderung (420) zur dritten Einrichtung (110) zu senden, wobei die dritte Einrichtung (110) konfiguriert ist, die Anwesenheits-Änderung (420) zu empfangen und als Reaktion darauf die Anwesenheits-Änderung (420) zum Benachrichtigungs-Server (145) zu leiten, und wobei der Benachrichtigungs-Server (145) konfiguriert ist, die Anwesenheits-Änderung (420) umzusetzen und eine Benachrichtigung (430) zu erzeugen und zur ersten Einrichtung (120) zu senden.

12. Das System aus Anspruch 1, das weiterhin einen Anmeldungs-Server (140) umfasst, der mit der ersten Einrichtung (120) und der dritten Einrichtung (110) gekoppelt ist, wobei die erste Einrichtung (120) konfiguriert ist, eine erste Anmeldung (510) zum Anmeldungs-Server (140) zu senden, der Anmeldungs-Server (140) konfiguriert ist, die erste Anmeldung (510) zu empfangen und als Reaktion darauf die erste Anmeldung (510) umzusetzen und eine zweite Anmeldung (515) zu erzeugen und zur dritten Einrichtung (110) zu senden, und wobei die dritte Einrichtung (110) konfiguriert ist, die zweite Anmeldung (515) zur zweiten Einrichtung (115) zu senden.

13. Das System aus Anspruch 12, wobei die erste Einrichtung (120) konfiguriert ist, eine Anwesenheits-Neuanmeldungs-Anforderung (525) zur Bestätigung der Anwesenheit zum Anmeldungs-Server (140) zu senden, der Anmeldungs-Server (140) konfiguriert ist, die Anwesenheits-Neuanmeldungs-Anforderung zu empfangen, und nach Überprüfung der ersten Genehmigung (215) in seinem Protokoll eine zweite Genehmigung (220) erneut zur ersten Einrichtung (120) zu senden, um die Anwesenheit zu bestätigen.

14. Das System aus Anspruch 1, das weiterhin einen Anmeldungs-Server (140) umfasst, der mit der ersten Einrichtung (120) und der dritten Einrichtung (110) gekoppelt ist, wobei die erste Einrichtung (120) konfiguriert ist, eine erste Anmeldung (510) zum Anmeldungs-Server (140) zu senden, der Anmeldungs-Server (140) konfiguriert ist, die erste Anmeldung (510) zu empfangen und als Reaktion darauf die erste Anmeldung (510) zur dritten Einrichtung (110) zu leiten, und wobei die dritte Einrichtung (110) konfiguriert ist, die erste Anmeldung (510) umzusetzen und eine zweite Anmeldung (515) zu erzeugen und zur zweiten Einrichtung (115) zu senden.

15. Das System aus Anspruch 14, wobei die erste Einrichtung (120) konfiguriert ist, eine Anwesenheits-Neuanmeldungs-Anforderung (525) zur Bestätigung der Anwesenheit zum Anmeldungs-Server (140) zu senden, der Anmeldungs-Server (140) konfiguriert ist, die Anwesenheits-Neuanmeldungs-Anforderung (525) zu empfangen, und nach Überprüfung der ersten Genehmigung (215) in seinem Protokoll eine zweite Genehmigung (220) erneut zur ersten Einrichtung (120) zu senden, um die Anwesenheit zu bestätigen.

16. Ein Verfahren zum Aufbau eines Kommunikationssystems zwischen einer ersten, zweiten und dritten Einrichtung (120, 115, 110), wobei das Verfahren folgendes umfasst: Empfang einer ersten Anmeldungs-Anforderung (205) von der ersten Einrichtung (120), Verarbeitung der ersten Anmeldungs-Anforderung (205), damit sich eine zweite Anmeldungs-Anforderung (210) ergibt, und Senden der zweiten Anmeldungs-Anforderung (210) zur zweiten Einrichtung (115), basierend auf der abgerufenen Information in der ersten Anmeldungs-Anforderung (205), **dadurch gekennzeichnet, dass** die erste Anmeldungs-Anforderung (205) dazu benutzt wird, die Anwesenheit einzurichten, und **dadurch**, dass ein Benachrichtigungs-Server (145) benutzt wird, der mit der ersten Einrichtung (120) und der dritten Einrichtung (110) gekoppelt ist, wobei der Benachrichtigungs-Server (145) interaktive Sprach-Antwort-Software (IVR) enthält, die andere Formen der Benachrichtigung, zusätzlich zum Abheben und Auflegen des Hörers, bestimmt.

17. Das Verfahren aus Anspruch 16, wobei der Schritt der Verarbeitung der ersten Anmeldungs-Anforderung (205) die Umsetzung der ersten Anmeldungs-Anforderung (205) in eine Anmeldungs-Anforderung eines herstellerspezifischen privaten Protokolls, eine private digitale Signalisierung und Sprache (PDSV) zum Austausch von Signalisierungs-Protokoll-Anmeldungs-Anforderungen, eine Analogsignal-Anmeldungs-Anforderung oder einen Sprach-Anruf umfasst.

18. Das Verfahren aus Anspruch 16, wobei die Verarbeitung der ersten Anmeldungs-Anforderung (205) die Umsetzung der ersten Anmeldungs-Anforderung (205) und die Erzeugung und Weiterleitung der zweiten Anmeldungs-Anforderung (210) durch die dritte Einrichtung (110) umfasst.

19. Das Verfahren aus Anspruch 16, das weiterhin das Senden einer ersten Genehmigung (215) zum Aufbau der Anwesenheit von der zweiten Einrichtung (115), den Empfang der ersten Genehmigung (215) durch die dritte Einrichtung (110), die Verarbeitung der ersten Genehmigung (215) durch die dritte Einrichtung (110), damit sich eine zweite Genehmigung (220) ergibt, und das Senden der zweiten Genehmigung (220) zur ersten Einrichtung (120) umfasst.

20. Das Verfahren aus Anspruch 19, das weiterhin das Senden einer Anwesenheits-Neuanmeldungs-Anforderung (525) durch die erste Einrichtung (120) zur Bestätigung der Anwesenheit, den Empfang der Anwesenheits-Neuanmeldungs-Anforderung (525) durch die dritte Einrichtung (110), die Überprüfung der vorherigen ersten Genehmigung (215) durch die dritte Einrichtung (110) und das erneute Senden der zweiten Genehmigung (220) zur ersten Einrichtung (120), um die Anwesenheit zu bestätigen, umfasst.

21. Das Verfahren aus Anspruch 16, das weiterhin das Senden einer ersten Ablehnung (315) des Aufbaus der Anwesenheit durch die zweite Einrichtung (115), den Empfang der ersten Ablehnung (315) durch die dritte Einrichtung (110), die Verarbeitung der ersten Ablehnung (315) durch die dritte Einrichtung (110), damit sich eine zweite Ablehnung (320) ergibt, und das Senden der zweiten Ablehnung (320) zur ersten Einrichtung (120) umfasst.

22. Das Verfahren aus Anspruch 19, das weiterhin das Senden einer Anwesenheits-Änderung (420) durch die zweite Einrichtung (115), den Empfang der Anwesenheits-Änderung (420) durch die dritte Einrichtung (110), die Verarbeitung der Anwesenheits-Änderung (420) durch die dritte Einrichtung (110), damit sich eine Benachrichtigung (425) ergibt, und das Senden der Benachrichtigung (430) zur ersten Einrichtung (120) umfasst.

23. Das Verfahren aus Anspruch 19, das weiterhin das Senden einer Anwesenheits-Änderung (420) durch die zweite Einrichtung (115), den Empfang der Anwesenheits-Änderung (420) durch die dritte Einrichtung (110), die Verarbeitung der Anwesenheits-Änderung (420) durch die dritte Einrichtung (110), damit sich eine Benachrichtigung (425) ergibt, das Senden der Benachrichtigung (425) durch die dritte Einrichtung (110), den Empfang der Benachrichtigung (425) durch einen βenachrichtigungs-Server (145) und das Senden der Benachrichtigung (430) zur ersten Einrichtung (120) umfasst.

24. Das Verfahren aus Anspruch 19, das weiterhin das Senden einer Anwesenheits-Änderung (420) durch die zweite Einrichtung (115), den Empfang der Anwesenheits-Änderung (420) durch die dritte Einrichtung (110), das Senden der Anwesenheits-Änderung (425) durch die dritte Einrichtung (110), den Empfang der Anwesenheits-Änderung (425) durch einen Benachrichtigungs-Server (145), die Verarbeitung der Anwesenheits-Änderung (425) durch den Benachrichtigungs-Server (145), damit sich eine Benachrichtigung (430) ergibt, das Senden der Benachrichtigung (430) durch den Benachrichtigungs-Server (145) zur ersten Einrichtung (120) umfasst.

25. Das Verfahren aus Anspruch 16, wobei das Empfangen den Empfang der ersten Anmeldungs-Anforderung (205) an einem Anmeldungs-Server (140) umfasst, und die Verarbeitung die Verarbeitung der ersten Anmeldungs-Arzforderung (205) durch den Anmeldungs-Server (140) umfasst.

26. Das Verfahren aus Anspruch 25, das weiterhin das Senden einer ersten Genehmigung (215) zum Aufbau der Anwesenheit durch die zweite Einrichtung (115), den Empfang der ersten Genehmigung (215) durch die dritte Einrichtung (110), die Verarbeitung der ersten Genehmigung (215) durch die dritte Einrichtung (110), damit sich eine zweite Genehmigung (220) ergibt, und das Senden der zweiten Genehmigung (220) zum Anmeldungs-Server (140) und zur ersten Einrichtung (120) umfasst.

27. Das Verfahren aus Anspruch 26, das weiterhin den Empfang einer Anwesenheits-Neuanmeldungs-Anforderung (525) zur Bestätigung der Anwesenheit durch den Anmeldungs-Server (140), die Überprüfung der zweiten Genehmigung (220) durch den Anmeldungs-Server (140) in seinem Speicher und das erneute Senden der zweiten Genehmigung (220) zur ersten Einrichtung (120), um die Anwesenheit zu bestätigen, umfasst.

28. Das Verfahren aus Anspruch 25, das weiterhin das Senden einer ersten Genehmigung (215) zum Aufbau der Anwesenheit durch die zweite Einrichtung (115), den Empfang der ersten Genehmigung (215) durch die dritte Einrichtung (110), die Verarbeitung der ersten Genehmigung (215) durch die dritte Einrichtung (110), damit sich eine zweite Genehmigung (220) ergibt, und das Senden der zweiten Genehmigung (220) zum Anmeldungs-Server (140) und zur ersten Einrichtung (120) umfasst, wobei die Verarbeitung die Verarbeitung der ersten Anmeldungs-Anforderung (205) durch die dritte Einrichtung (110) umfasst.

29. Das Verfahren aus Anspruch 28, das weiterhin den Empfang einer Anwesenheits-Neuanmeldungs-Anforderung zur Bestätigung der Anwesenheit durch den Anmeldungs-Server (140), die Überprüfung der zweiten Genehmigung (220) durch den Anmeldungs-Server (140) in seinem Speicher und das erneute Senden der zweiten Genehmigung (220) zur ersten Einrichtung (120), um die Anwesenheit zu bestätigen, umfasst.

## Revendications

1. Un système de communication comprenant : un premier dispositif (120), un deuxième dispositif (115) et un troisième dispositif (110) situé entre le premier dispositif (120) et le deuxième dispositif (115), dans lequel ledit premier dispositif (120) est configuré de sorte à envoyer une première demande d'enregistrement (205) au troisième dispositif (110), dans lequel ledit troisième dispositif (110) est configuré de sorte à recevoir la première demande d'enregistrement (205), dans lequel ledit troisième dispositif (110) est configuré de sorte à traduire la première demande d'enregistrement (205), à générer une deuxième demande d'enregistrement (210) et à l'acheminer au deuxième dispositif (115) en fonction des informations récupérées dans la première demande d'enregistrement (205), **caractérisé par** les faits que ladite première demande d'enregistrement (205) est utilisée afin de déterminer la présence, qu'il comporte un serveur de notifications (145) associé au premier dispositif (120) et au troisième dispositif (110) susmentionnés et dans lequel ledit serveur de notifications (145) comporte un serveur vocal interactif, ou SVI, un logiciel qui permet de déterminer d'autres formes de notifications en plus de raccroché ou décroché.

2. Le système de la revendication 1 dans lequel la deuxième demande d'enregistrement (210) comprend une demande d'enregistrement selon un protocole propriétaire d'un fournisseur donné, une signalisation numérique propriétaire et de la voix afin d'échanger la demande d'enregistrement selon le protocole de signalisation, sous forme d'un signal analogique ou un appel vocal.

3. Le système de la revendication 1 dans lequel le premier dispositif (120) comporte un user agent client ((UAC), le deuxième dispositif (115) comporte un téléphone raccordé à un autocommutateur privé (PABX) et le troisième dispositif (110) comporte un autocommutateur privé (PABX) avec gestion de présence.

4. Le système de la revendication 1 dans lequel la première demande d'enregistrement (205) comprend une demande d'enregistrement selon le protocole IP ou une demande d'enregistrement selon le protocole SIP (Session Initiation Protocol)

5. Le système de la revendication 1 dans lequel une traduction entre le protocole IP et le protocole propriétaire du fournisseur est réalisée.

6. Le système de la revendication 1 dans lequel le deuxième dispositif (115) est configuré de sorte à pouvoir envoyer au troisième dispositif (110) la première acceptation (215) de la détermination de présence, le troisième dispositif (110) est configuré de sorte à pouvoir recevoir la première acceptation (215) et, en réponse, à enregistrer et à traduire la première acceptation (215), puis à générer une deuxième acceptation (220) et à l'acheminer au premier dispositif (120).

7. Le système de la revendication 1 dans lequel le deuxième dispositif (115) est configuré de sorte à pouvoir envoyer au troisième dispositif (110) un premier refus de la détermination de la présence, le troisième dispositif (110) est configuré de sorte à pouvoir recevoir le premier refus et, en réponse, à enregistrer le premier refus dans un fichier journal et à le traduire, puis à générer un deuxième refus et à l'acheminer au premier dispositif (120).

8. Le système de la revendication 1 dans lequel le deuxième dispositif (115) est configuré de sorte à pouvoir envoyer au troisième dispositif (110) une modification de la présence, le troisième dispositif (110) est configuré de sorte à pouvoir recevoir la modification de la présence, et, en réponse, à traduire la modification de la présence, puis à générer une notification (230) et à l'acheminer au premier dispositif (120).

9. Le système de la revendication 8 dans lequel le premier dispositif (120) est configuré de sorte à pouvoir envoyer au troisième dispositif (110) une demande de réenregistrement de présence afin de confirmer la présence, le troisième dispositif (110) est configuré de sorte à pouvoir recevoir la demande de réenregistrement de présence et, après vérification de la première acceptation (215) dans son fichier journal, à transférer la deuxième acceptation (220) au premier dispositif (120) afin de confirmer la présence.

10. Le système de la revendication 1 qui comporte en outre un serveur de notifications (145) associé au premier dispositif (120) et au troisième dispositif (110), dans lequel le deuxième dispositif (115) est configuré de sorte à envoyer une modification de présence (420) au troisième dispositif (110), le troisième dispositif (110) est configuré de sorte à pouvoir recevoir la modification de présence (420) et, en, réponse, à traduire la modification de présence (420), à générer une notification (425) et à l'acheminer au serveur de notifications (145) et dans lequel le serveur de notifications (145) est configuré de sorte à pouvoir envoyer la notification (430) au premier dispositif (120).

11. Le système de la revendication 1 qui comporte en outre un serveur de notifications (145) associé au premier dispositif (120) et au troisième dispositif (110), dans lequel le deuxième dispositif (115) est configuré de sorte à envoyer une modification de présence (420) au troisième dispositif (110), le troisième dispositif (110) est configuré de sorte à pouvoir recevoir la modification de présence (420) et, en, réponse, à acheminer la modification de présence (420) au serveur de notifications (145) et dans lequel le serveur de notifications (145) est configuré de sorte à pouvoir traduire la modification de présence (420), puis à générer une notification et à l'envoyer au premier dispositif (120).

12. Le système de la revendication 1 qui comporte en outre un serveur d'enregistrement (140) associé au premier dispositif (120) et au troisième dispositif (110), dans lequel le premier dispositif (120) est configuré de sorte à pouvoir envoyer un premier enregistrement (510) au serveur d'enregistrement (140), le serveur d'enregistrement (140) est configuré de sorte à pouvoir recevoir le premier enregistrement (510), et, en réponse, à traduire le premier enregistrement, puis à générer un deuxième enregistrement (515) et à l'acheminer au troisième dispositif (110) et dans lequel le troisième dispositif (110) est configuré de sorte à pouvoir envoyer le deuxième enregistrement (515) au deuxième dispositif (115).

13. Le système de la revendication 12 dans lequel le premier dispositif (120) est configuré de sorte à pouvoir envoyer au serveur d'enregistrement (140) une demande de réenregistrement de présence (525) afin de confirmer la présence, le serveur d'enregistrement (140) est configuré de sorte à pouvoir recevoir la demande de réenregistrement de présence et, après vérification de la première acceptation (215) dans son fichier journal, à transférer une deuxième acceptation (220) au premier dispositif (120) afin de confirmer la présence.

14. Le système de la revendication 1 qui comporte en outre un serveur d'enregistrement (140) associé au premier dispositif (120) et au troisième dispositif (110), dans lequel le premier dispositif (120) est configuré de sorte à pouvoir envoyer un premier enregistrement (510) au serveur d'enregistrement (140), le serveur d'enregistrement (140) est configuré de sorte à pouvoir recevoir le premier enregistrement (510), et, en réponse, à acheminer le premier enregistrement (510) au troisième dispositif (110) et le troisième dispositif (110) est configuré de sorte à pouvoir traduire le premier enregistrement (510), puis à générer un deuxième enregistrement (515) et à l'envoyer au deuxième dispositif (115).

15. Le système de la revendication 14 dans lequel le premier dispositif (120) est configuré de sorte à pouvoir envoyer au serveur d'enregistrement (140) une demande de réenregistrement de présence (525) afin de confirmer la présence, le serveur d'enregistrement (140) est configuré de sorte à pouvoir recevoir la demande de réenregistrement de présence (525) et, après vérification de la première acceptation (215) dans son fichier journal, à transférer une deuxième acceptation (220) au premier dispositif (120) afin de confirmer la présence.

16. Un procédé, destiné à établir un système de communications entre un premier, un deuxième et un troisième dispositif (120, 115, 110), qui comporte : la réception d'une première demande d'enregistrement (205) en provenance du premier dispositif (120) ; le traitement de la première demande d'enregistrement (205) pour produire une deuxième demande d'enregistrement (210) ; et l'envoi de la deuxième demande d'enregistrement (210) au deuxième dispositif (115) en fonction des informations récupérées dans la première demande d'enregistrement (205), **caractérisé par le fait que** ladite première demande d'enregistrement (205) est utilisée afin de déterminer la présence, et qu'un serveur de notifications (145) associé auxdits premier dispositif (120) et troisième dispositif (110), dans lequel ledit serveur de notifications (145) comporte un serveur vocal interactif, ou SVI, un logiciel qui détermine d'autres formes de notification en plus de décroché ou raccroché.

17. Le procédé de la revendication 16, dans lequel ladite étape de traitement de ladite première demande d'enregistrement (205) comporte une traduction de ladite première demande d'enregistrement (205) en une demande d'enregistrement selon le protocole propriétaire d'un fournisseur donné, une signalisation numérique propriétaire et de la voix afin d'échanger la demande d'enregistrement selon le protocole de signalisation, sous forme d'un signal analogique ou un appel vocal.

18. Le procédé de la revendication 16, dans lequel le traitement de la première demande d'enregistrement (205) comporte une traduction de la première demande d'enregistrement (205) ainsi que la génération de la deuxième demande d'enregistrement (210) et son acheminement par le troisième dispositif (110).

19. Le procédé de la revendication 16 qui comporte en outre l'envoi d'une première acceptation (215) par le deuxième dispositif (115) afin de déterminer la présence, la réception de la première acceptation (215) par le troisième dispositif (110), le traitement de la première acceptation (215) par le troisième dispositif (110) afin de produire une deuxième acceptation (220) et l'envoi de la deuxième acceptation (220) au premier dispositif(120).

20. Le procédé de la revendication 19 qui comporte en outre l'envoi par le premier dispositif (120) d'une demande de réenregistrement de présence (525) afin de confirmer la présence, la réception de la demande de réenregistrement de présence (525) par le troisième dispositif (110), la vérification de la première acceptation (215) par le troisième dispositif (110) et l'envoi de la deuxième acceptation (220) au premier dispositif (120) pour confirmer la présence.

21. Le procédé de la revendication 16 qui comporte en outre l'envoi d'un premier refus (315) par le deuxième dispositif (115) afin de déterminer la présence, la réception du premier refus (315) par le troisième dispositif (110), le traitement du premier refus (315) par le troisième dispositif (110) afin de produire un deuxième refus (320) et l'envoi du deuxième refus (320) au premier dispositif (120).

22. Le procédé de la revendication 19 qui comporte en outre l'envoi d'une modification de présence (420) par le deuxième dispositif (115), la réception de la modification de présence (420) par le troisième dispositif (110), le traitement de la modification de présence (420) par le troisième dispositif (110) afin de produire une notification (425) et l'envoi de la notification (430) au premier dispositif (120).

23. Le procédé de la revendication 19 qui comporte en outre l'envoi d'une modification de présence (420) par le deuxième dispositif (115), la réception de la modification de présence (420) par le troisième dispositif (110), le traitement de la modification de présence (420) par le troisième dispositif (110) afin de produire une notification (425) et l'envoi de la notification (425) par le troisième dispositif (110), la réception de la notification (425) par un serveur de notifications (145) et l'envoi de la notification (430) au premier dispositif (120).

24. Le procédé de la revendication 19 qui comporte en outre l'envoi d'une modification de présence (420) par le deuxième dispositif (115), la réception de la modification de présence (420) par le troisième dispositif (110), l'envoi de la modification de présence (425) par le troisième dispositif (110), la réception de la modification de présence (425) par un serveur de notifications (145), le traitement de la modification de présence (425) par le serveur de notifications (145) afin de produire une notification (430) et l'envoi de la notification (430) au premier dispositif (120) par le serveur de notifications (145).

25. Le procédé de la revendication 16 dans lequel la réception comprend la réception de la première demande d'enregistrement (205) par un serveur d'enregistrement (140) et le traitement comprend le traitement de la première demande d'enregistrement (205) par le serveur d'enregistrement (140).

26. Le procédé de la revendication 25 qui comporte en outre l'envoi d'une première acceptation (215) par le deuxième dispositif (115) afin de déterminer la présence, la réception de la première acceptation (215) par le troisième dispositif (110), le traitement de la première acceptation (215) par le troisième dispositif (110) afin de produire une deuxième acceptation (220) et l'envoi de la deuxième acceptation (220) au serveur d'enregistrement (140) et au premier dispositif (120).

27. Le procédé de la revendication 26 qui comporte en outre la réception d'une demande de réenregistrement de présence (525) par le serveur d'enregistrement (140) afin de confirmer la présence, la vérification de la deuxième acceptation (220) par le serveur d'enregistrement (140) dans sa mémoire et l'envoi de la deuxième acceptation (220) au premier dispositif (120) afin de confirmer la présence.

28. Le procédé de la revendication 26 qui comporte en outre l'envoi d'une première acceptation (215) par le deuxième dispositif (115) afin de déterminer la présence, la réception de la première acceptation (215) par le troisième dispositif (110), le traitement de la première acceptation (215) par le troisième dispositif (110) afin de produire une deuxième acceptation (220) et l'envoi de la deuxième acceptation (220) au serveur d'enregistrement (140) et au premier dispositif (120), dans lequel le traitement comporte le traitement de la première demande d'enregistrement (205) par le troisième dispositif (110).

29. Le procédé de la revendication 28 qui comporte en outre la réception d'une demande de réenregistrement de présence par le serveur d'enregistrement (140) afin de confirmer la présence, la vérification de la deuxième acceptation (220) par le serveur d'enregistrement (140) dans sa mémoire et l'envoi de la deuxième acceptation (220) au premier dispositif (120) afin de confirmer la présence.
